# EUROPEAN PATENT APPLICATION

(11) **EP 3 208 980 A1**
(43) Date of publication of application: **23.08.2017**
(21) Application number: 15851359.8
(22) Date of filing: 23.01.2015
(51) Int. Cl.: H04L 12/931, H04L 29/10

(54) **SERVICE DATA FLOW SENDING AND FORWARDING METHOD AND APPARATUS**

(30) Priority: 17.10.2014 CN 201410555240
(71) Applicant: ZTE Corporation, Shenzhen, Guangdong 518057 (CN)
(72) Inventor: WANG, Xueqiang, Shenzhen Guangdong 518057 (CN); WU, Xiaosu, Shenzhen Guangdong 518057 (CN); WANG, Yong, Shenzhen Guangdong 518057 (CN)
(74) Representative: Deambrogi, Edgardo
(86) International application number: PCT/CN2015/071454
(87) International publication number: WO 2016/058292

(57) **Abstract**

A method and device for sending or forwarding a service data flow are provided. A source data node determines, according to calculation methods pre-set in multiple switch chips and service requirements, a calculation method to be used. The calculation method is used for selecting a network card needed for sending a service data flow to one switch chip of the multiple switch chips. At least one port of the source data node is respectively connected to each switch chip of the multiple switch chips. The source data node selects the network card through the calculation method to be used and sends the service data flow via the network card. According to technical solutions, when switch fabric cards forward data, the data is preferably forwarded by the present switch fabric card, and traffic bandwidth of a stacked channel can be remarkably reduced.

## Description

### Technical Field

The present disclosure relates to the field of communication, and in particular to a method and device for sending or forwarding a service data flow.

### Background

Currently, a ten-Gigabit switch platform usually works by means of the stacking, aggregating and forwarding of switch chips. Each stacked chip respectively adopts one or more ten-Gigabit ports, and through the aggregation of these ports, a large cross-card aggregation group can be formed.

A software development kit (SDK) of the switch chips sets, according to an order in which the ports join the aggregation group, a forwarding table of the aggregation group, while the order in which the ports join the aggregation group is random, therefore, there may be great randomness when a switch chip of a switch fabric card selects a specific forwarding port in the aggregation group. In theory, at least half of traffic needs to be forwarded across chips, so bandwidth of a stacked channel should be large enough to ensure a non-blocking switch of a stack.

In order to reduce the traffic of the stacked channel, in a related forwarding technology, Access Control List (ACL) rules are adopted to redirect data to realize the cross-chip forwarding of a heterogeneous chip, thus reducing stack traffic bandwidth. However, the solution has drawbacks that this technology is designed for a heterogeneous chip and required to adopt the ACL rules, moreover, ports of the heterogeneous chip cannot join a TRUNK group.

Therefore, the solution for reducing the traffic of a stacked channel in a related technology has some limitations and can only be used within small range.

### Summary

Some embodiments of the present disclosure provide a method and device for sending or forwarding a service data flow to at least solve the problem that the solution for reducing the traffic of a stacked channel in a related technology has some limitations.

According to an embodiment of the present disclosure, a method for sending a service data flow is provided.

The method for sending a service data flow according to an embodiment of the present disclosure may include the following acts. A source data node determines, according to calculation methods pre-set in multiple switch chips and service requirements, a calculation method to be used. The calculation method is used for selecting a network card needed for sending a service data flow to one switch chip of the multiple switch chips, and at least one port of the source data node is respectively connected to each switch chip of the multiple switch chips. The source data node selects the network card through the calculation method to be used and sends the service data flow via the network card.

In an exemplary embodiment, the act that the source data node selects the network card through the calculation method to be used may include the following acts. The source data node obtains a TRUNK table through the calculation method to be used, where a correspondence between ports of the source data node and network card identifiers of the source data node is respectively stored in each index position in the TRUNK table. The source data node searches, in the TRUNK table, for a network card identifier for sending the service data flow.

In an exemplary embodiment, the act that the source data node obtains the TRUNK table through the calculation method to be used may include the following acts. The source data node determines a field involved in calculation through the calculation method to be used. The source data node selects, according to the field involved in the calculation, a field range to be modified. The source data node obtains the TRUNK table by adopting the field range to be modified.

In an exemplary embodiment, the number of members in the TRUNK table may equal a value obtained by multiplying a least common multiple of maximum numbers of ports of a data node connected to respective switch chip of the multiple switch chips by the number of the multiple switch chips.

According to another embodiment of the present disclosure, a method for forwarding a service data flow is provided.

The method for forwarding a service data flow according to an embodiment of the present disclosure may include the following acts. A switch chip receives a service data flow from a source data node. The switch chip determines a port for forwarding the service data flow by adopting a calculation method the same as a calculation method adopted by the source data node, where the calculation method adopted by the source data node is determined according to calculation methods pre-set in multiple switch chips and service requirements. The switch chip forwards the service data flow to a destination data node via the determined port.

In an exemplary embodiment, the act that the switch chip determines the port for forwarding the service data flow by adopting the calculation method the same as the calculation method adopted by the source data node may include the following acts. The switch chip obtains a TRUNK table through the calculation method to be used, where a correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that sends the service data flow. The switch chip searches, in the TRUNK table, for the port for forwarding the service data flow.

In an exemplary embodiment, the number of members in the TRUNK table may equal a value obtained by multiplying a least common multiple of maximum numbers of ports of a data node connected to respective switch chip of the multiple switch chips by the number of the multiple switch chips.

According to another embodiment of the present disclosure, a device for sending a service data flow is provided.

The device for sending a service data flow according to an embodiment of the present disclosure may include:
a determining module, arranged to determine, according to calculation methods pre-set in multiple switch chips and service requirements, a calculation method to be used, where the calculation method is used for selecting a network card needed for sending a service data flow to one switch chip of the multiple switch chips, and at least one port of the source data node is respectively connected to each switch chip of the multiple switch chips;
a selecting module, arranged to select the network card through the calculation method to be used; and
a sending module, arranged to send the service data flow via the network card.

In an exemplary embodiment, the selecting module may include:
a calculating unit, arranged to obtain a TRUNK table through the calculation method to be used, where a correspondence between ports of the source data node and network card identifiers of the source data node is respectively stored in each index position in the TRUNK table; and
a searching unit, arranged to search, in the TRUNK table, for a network card identifier for sending the service data flow.

In an exemplary embodiment, the calculating unit may include:
a determining submodule, arranged to determine a field involved in calculation through the calculation method to be used;
a selecting submodule, arranged to select, according to the field involved in the calculation, a field range to be modified; and
an obtaining submodule, arranged to obtain the TRUNK table by adopting the field range to be modified.

In an exemplary embodiment, the number of members in the TRUNK table may equal a value obtained by multiplying a least common multiple of maximum numbers of ports of a data node connected to respective switch chip of the multiple switch chips by the number of the multiple switch chips.

According to another embodiment of the present disclosure, a device for forwarding a service data flow is provided.

The device for forwarding a service data flow according to an embodiment of the present disclosure may include:
a receiving module, arranged to receive a service data flow from a source data node;
a determining module, arranged to determine a port for forwarding the service data flow by adopting a calculation method the same as a calculation method adopted by the source data node, where the calculation method adopted by the source data node is determined according to calculation methods pre-set in multiple switch chips and service requirements; and
a forwarding module, arranged to forward the service data flow to a destination data node via the determined port.

In an exemplary embodiment, the determining module may include:
an obtaining unit, arranged to obtain a TRUNK table through the calculation method to be used, where a correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that send the service data flow; and
searching unit, arranged to search, in the TRUNK table, for the port for forwarding the service data flow.

In an exemplary embodiment, the number of members in the TRUNK table may equal a value obtained by multiplying a least common multiple of maximum numbers of ports of a data node connected to respective switch chip of the multiple switch chips by the number of the multiple switch chips.

In the embodiments of the present disclosure, a source data node determines, according to calculation methods pre-set in multiple switch chips and service requirements, a calculation method to be used, where the calculation method to be used card needed to send a service data flow to one switch chip of the multiple switch chips, and at least one port of the source data node is respectively connected to each switch chip of the multiple switch chips; and the source data node selects the network card through the calculation method to be used and sends the service data flow via the network card. Therefore, the problem that the solution for reducing the traffic of a stacked channel in a related technology has some limitations is solved. In addition, when switch fabric cards forward data, the data is preferably forwarded by the present switch fabric card, and traffic bandwidth of a stacked channel can be remarkably reduced.

### Brief Description of the Drawings

The drawings described here are intended to provide further understanding of the present disclosure and constitute a part of the application. The exemplary embodiments of the present disclosure and description thereof are intended to explain the present disclosure and do not unduly limit the present disclosure. In the drawings:
Fig. 1 shows a flowchart of a method for sending a service data flow according to an embodiment of the present disclosure;
Fig. 2 shows a flowchart of a method for forwarding a service data flow according to an embodiment of the present disclosure;
Fig. 3 shows a diagram of stack and aggregation according to an exemplary embodiment of the present disclosure;
Fig. 4 shows a structural diagram of a device for sending a service data flow according to an embodiment of the present disclosure;
Fig. 5 shows a structural diagram of a device for sending a service data flow according to an exemplary embodiment of the present disclosure;
Fig. 6 shows a structural diagram of a device for forwarding a service data flow according to an embodiment of the present disclosure; and
Fig. 7 shows a structural diagram of a device for forwarding a service data flow according to an exemplary embodiment of the present disclosure.

### Detailed Description of the Embodiments

Hereinafter, the present disclosure will be described in detail with reference to the drawings and in combination with the embodiments. It may be appreciated that in the case of no conflict, the embodiments in the application and features in the embodiments can be combined with each other.

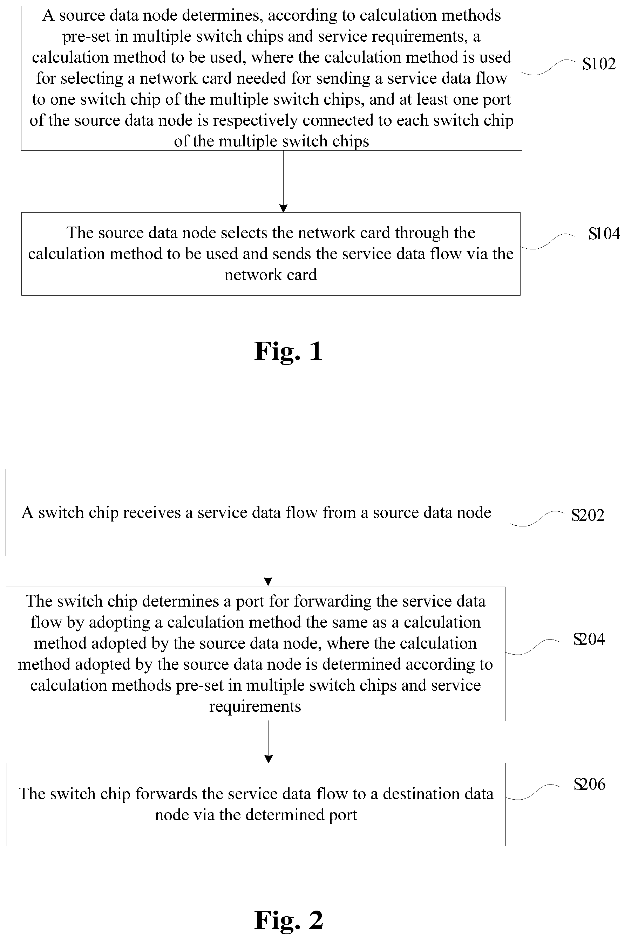

Fig. 1 shows a flowchart of a method for sending a service data flow according to an embodiment of the present disclosure. As shown in Fig. 1, the method may include the following processing acts S102 and S104.

At act S102, a source data node determines, according to calculation methods pre-set in multiple switch chips and service requirements, a calculation method to be used. The calculation method is used for selecting a network card needed for sending a service data flow to one switch chip of the multiple switch chips, and at least one port of the source data node is respectively connected to each switch chip of the multiple switch chips.

At act S104, the source data node selects the network card through the calculation method to be used and sends the service data flow via the network card.

In a related technology, the solution for reducing the traffic of a stacked channel has some limitations. Through the method shown in Fig.1, the calculation method adopted by the source data node is determined according to service requirements and the TRUNK HASH calculation methods of the switch chips provided by chip manufacturers, and then the service data flow is constructed. After the network card is selected according to the determined calculation method, the service data flow is sent via the network card. By virtue of the technical solution, the problem that the solution for reducing the traffic of a stacked channel in a related technology has some limitations is solved. In addition, when switch cards forward data, the data is preferably forwarded by the present switch fabric card, and traffic bandwidth of a stacked channel can be remarkably reduced.

It may be appreciated that a requirement for hardware wiring is that, when each stacked switch chip is connected to the data node, each data node adopts at least one port to connect to the each stacked switch chip. This may serve as a precondition that the switch chips select the present switch fabric card preferably to forward the service data flow.

In an exemplary embodiment, the act S104 in which the source data node selects the network card through the calculation method to be used may include the following processing acts S1 and S2.

At act S1, the source data node obtains a TRUNK table through the calculation method to be used, where a correspondence between ports of the source data node and network card identifiers of the source data node is respectively stored in each index position in the TRUNK table.

At act S2, the source data node searches, in the TRUNK table, for a network card identifier for sending the service data flow.

For the data node, the sorting method of the TRUNK table is the same as that of the switch ships. The difference is that the ports stored in each index position are network card numbers of the data node corresponding to chip numbers calculated by the switch chips.

In an exemplary embodiment, the act S1 in which the source data node obtains the TRUNK table through the calculation method to be used may include the following acts S11 and S12.

At act S11, the source data node determines a field involved in calculation through the calculation method to be used.

At act S12, the source data node selects, according to the field involved in the calculation, a field range to be modified; and the source data node obtains the TRUNK table by adopting the field range to be modified.

Generally, TRUNK HASH calculation methods of the switch chips are provided by chip manufacturers, and users usually cannot modify the methods. However, for the data node interconnected to the switch chips, users can modify the TRUNK HASH calculation methods according to their needs when selecting a way of determining a forwarding port. Therefore, during system design, the TRUNK HASH calculation methods of the switch chips that cannot be modified may be selected first, and then a core field involved in the calculation is determined according to the calculation method. When the data node constructs the data source, a field range to be modified may be selected according the core field, so that traffic can be balanced when the field is used in TRUNK HASH calculation.

Since the TRUNK HASH calculation methods of the data node can be modified, the TRUNK HASH calculation methods can be designed to be the same as the TRUNK HASH calculation methods of the switch chips, which can ensure that the TRUNK table of the data node is completely the same as the TRUNK table of the switch chips. For the same data flow, a TRUNK HASH index calculated by the data node is the HASH index calculated by the switch chips, and the above sorting method of the TRUNK table is required to be the same as that of the chip number in the same index position. In this way, the chip numbers of the switch chips corresponding to the forwarding port selected by the data node actually are the chip numbers of destination forwarding ports of the switch chips, and stack processing is not needed anymore, thus greatly saving bandwidth of the stacked channel of the switch chips.

During the implementation of the exemplary embodiment, the number of members in the TRUNK table may equal a value obtained by multiplying a least common multiple of maximum numbers of ports of a data node connected to respective switch chip of the multiple switch chips by the number of the multiple switch chips, namely, the number of members in the TRUNK software table/hardware table may be the product of the least common multiple of maximum numbers of ports designed by each switch chip to connect a single data node and the number of stacked chips as the number of ports for the members thereof.

Fig. 2 shows a flowchart of a method for forwarding a service data flow according to an embodiment of the present disclosure. As shown in Fig. 2, the method may include the following processing acts S202 to S206.

At act S202, a switch chip receives a service data flow from a source data node.

At act S204, the switch chip determines a port for forwarding the service data flow by adopting a calculation method the same as a calculation method adopted by the source data node, where the calculation method adopted by the source data node is determined according to calculation methods pre-set in multiple switch chips and service requirements.

At act S206, the switch chip forwards the service data flow to a destination data node via the determined port.

The port-to-port based data flow specifies an offset field to modify control (for example, Media Access Control (MAC)/Internet Protocol (IP)/Transmission Control Protocol (TCP)/User Datagram Protocol (UDP)/ Virtual Local Area Network (VLAN)/PORT/MOD HASH selection control), and then constructs the sorting of the TRUNK members through the switch fabric cards to make the data preferably forwarded by the present switch fabric card when the switch fabric cards forward data. Therefore, traffic bandwidth of the stacked channel can be remarkably reduced. In this way, only two stacked channels of 10G bandwidth can provide as much as hundreds of Gigabits of cross-card aggregation and forwarding traffic bandwidth, and there is no need to deploy half of chip traffic bandwidth on the stacked channel. It manifests in that multiple switch chips or multiple single cards work in a stacked manner, provides a large switch bandwidth for the outside while a stack bandwidth for itself is small.

In an exemplary embodiment, the act S204 in which the switch chip determines the port for forwarding the service data flow by adopting the calculation method the same as the calculation method adopted by the source data node may include the following processing acts S3 and S4.

At act S3, the switch chip obtains a TRUNK table through the calculation method to be used. A correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that send the service data flow.

At act S4, the switch chip searches, in the TRUNK table, for the port for forwarding the service data flow.

For the switch fabric cards, the switch chips on the switch fabric cards need to be numbered and then to be sorted. The sorting method thereof needs to ensure that each switch chip occupies the same number of index positions in the hardware TRUNK table, that each switch chip has the same hardware table content in the same TRUNK group, namely, the chip numbers and port numbers stored in the same index positions of the same TRUNK table are completely the same, and that each switch chip stores the same chip numbers in the same index positions of different TRUNK groups.

During the implementation of the exemplary embodiment, the number of members in the TRUNK table may equal a value obtained by multiplying a least common multiple of maximum numbers of ports of a data node connected to respective switch chip of the multiple switch chips by the number of the multiple switch chips.

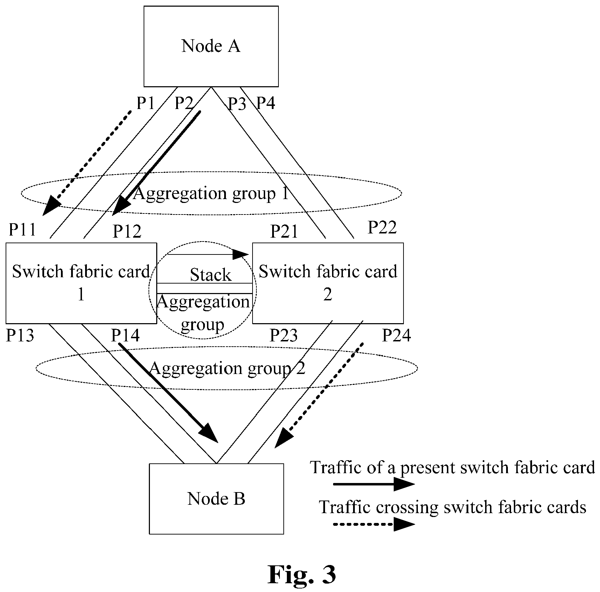

Hereinafter, the above exemplary implementation process will be further described in combination with the exemplary embodiment shown in Fig.3.

Fig. 3 shows a diagram of stack and aggregation according to an exemplary embodiment of the present disclosure. As shown in Fig. 3, switch fabric card 1 and switch fabric card 2 are respectively a left switch fabric card and a right switch fabric card. MOD ID of switch fabric card 1 and the MOD ID of switch fabric card 2 are respectively 1 and 2. An aggregation member table is empty in initial status. The order in which the ports join the aggregation group set by the switch fabric cards is described as follows.

First, the port P11 of the left switch fabric card joins the aggregation group TRUNK 1. After the joining of the port P11, the TRUNK member table of the left switch fabric card and the right switch fabric card is shown as Table 1. At this time, there is only one port, therefore, all eight indexes point to this port.

**Table 1**

| Index | 0 | 1 | 2 | 3 | 4 | 5 | 6 | 7 |
|---|---|---|---|---|---|---|---|---|
| PORT | P11 | P11 | P11 | P11 | P11 | P11 | P11 | P11 |
| MOD ID | 1 | 1 | 1 | 1 | 1 | 1 | 1 | 1 |

Second, the port P12 of the left switch fabric card joins the aggregation group TRUNK 1. After the joining of the port P12, the TRUNK member table of the left switch fabric card and the right switch fabric card is shown as Table 2. At this time, all the ports of the left switch fabric card join the aggregation group TRUNK 1. The ports P11 and P12 are sorted. The ports of smaller port numbers occupy even index positions, and the ports of larger port numbers occupy odd index positions. In the exemplary embodiment, it is assumed that P11<P12.

**Table 2**

| Index | 0 | 1 | 2 | 3 | 4 | 5 | 6 | 7 |
|---|---|---|---|---|---|---|---|---|
| PORT | P11 | P12 | P11 | P12 | P11 | P12 | P11 | P12 |
| MOD ID | 1 | 1 | 1 | 1 | 1 | 1 | 1 | 1 |

Third, the port P21 of the right switch fabric card joins the aggregation group TRUNK 1. After the joining of the port P21, the TRUNK member table of the left switch fabric card and the right switch fabric card is shown as Table 3. At this time, the first port of the right switch fabric card joins the aggregation group TRUNK 1, and all odd indexes need to point to P21.

**Table 3**

| Index | 0 | 1 | 2 | 3 | 4 | 5 | 6 | 7 |
|---|---|---|---|---|---|---|---|---|
| PORT | P11 | P21 | P12 | P21 | P11 | P21 | P12 | P21 |
| MOD ID | 1 | 2 | 1 | 2 | 1 | 2 | 1 | 2 |

Forth, the port P22 of the right switch fabric card joins the aggregation group TRUNK 1. After the joining of the port P22, the TRUNK member table of the left switch fabric card and the right switch fabric card is shown as Table 4. At this time, all the ports of the right switch fabric card join the aggregation group TRUNK 1. The ports of the right switch fabric card are sorted, and occupy the odd index positions of a left slot in turn in an ascending method. It is assumed that P21<P22.

**Table 4**

| Index | 0 | 1 | 2 | 3 | 4 | 5 | 6 | 7 |
|---|---|---|---|---|---|---|---|---|
| PORT | P11 | P21 | P12 | P22 | P11 | P21 | P12 | P22 |
| MOD ID | 1 | 2 | 1 | 2 | 1 | 2 | 1 | 2 |

The principles that the right and left switch fabric cards exit the aggregation group are similar. The order in which P1, P2, P3 and P4 join the TRUNK group of the data node is similar to that of the switch fabric cards. Here, P1 and P2 are connected to the left switch fabric card and adopt the even indexes, and P3 and P4 are connected to the right switch fabric card and adopt the odd indexes. Detailed description will be omitted here.

It may be appreciated that, during the implementation of the exemplary embodiment of the present disclosure, the following principles may be followed.

For stacked switch fabric cards, only when all the ports on a certain stacked switch fabric card exit the aggregation group, the odd and even indexes can be modified to adopt the ports of other stacked switch fabric cards (equivalent to the port number of the stacked switch fabric cards being 0). When the port number of the stacked switch fabric cards is 1, the port occupies all ports of the odd/even index positions corresponding to the stacked switch fabric cards. When the port number of the stacked switch fabric cards is more than 1, the odd/even index positions corresponding to the stacked switch fabric cards are occupied in turn according to a result of port sorting.

For the data node, only when all the ports connected to the left switch fabric card or the right switch fabric card exit the aggregation group, the odd and even indexes can be modified. For example, only when both P1 and P2 exit the aggregation group, the odd and even indexes can be pointed to P3 or P4.

Fifth, after constructing a message, the data node can select the ports according to the HASH calculation method. For example, when an index value of HASH is 1, the port whose MOD number is 1 connected to the switch fabric cards is selected. After the message reaches the switch fabric cards, since the HASH calculation method is completely the same as the calculation method of the data node, the index value of HASH calculated by the switch fabric cards is also 1. The MOD number of a destination single card of Number 1 index corresponding to the forwarded destination TRUNK is 1, which means that after receiving the above message, the single card whose MOD number is 1 will conduct forwarding on the present switch fabric card and the forwarding port number is the port number of TRUNK index 1.

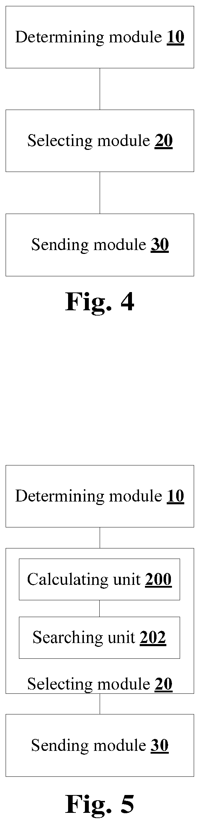

Fig. 4 shows a structural diagram of a device for sending a service data flow according to an embodiment of the present disclosure. As shown in Fig 4, the device for sending a service data flow may include: a determining module 10, arranged to determine, according to calculation methods pre-set in multiple switch chips and service requirements, a calculation method to be used, where the calculation method is used for selecting a network card needed for sending a service data flow to one switch chip of the multiple switch chips, and at least one port of the source data node is respectively connected to each switch chip of the multiple switch chips; a selecting module 20, arranged to select the network card through the calculation method to be used; and a sending module 30, arranged to send the service data flow via the network card.

With the device in Fig. 4, the problem that the solution for reducing the traffic of a stacked channel in a related technology has some limitations is solved. In addition, when switch fabric cards forward data, the data is preferably forwarded by the present switch fabric card, and traffic bandwidth of a stacked channel can be remarkably reduced.

In an exemplary embodiment, As shown in Fig 5, the selecting module 20 may include: a calculating unit 200, arranged to obtain a TRUNK table through the calculation method to be used, where a correspondence between ports of the source data node and network card identifiers of the source data node is respectively stored in each index position in the TRUNK table; and a searching unit 202, arranged to search, in the TRUNK table, for a network card identifier for sending the service data flow.

In an exemplary embodiment, the calculating unit 200 may include: a determining submodule (not shown in the figure), arranged to determine a field involved in calculation through the calculation method to be used; a selecting submodule (not shown in the figure), arranged to select, according to the field involved in the calculation, a field range to be modified; and an obtaining submodule (not shown in the figure), arranged to obtain the TRUNK table by adopting the field range to be modified.

During the implementation of the exemplary embodiment, the number of members in the TRUNK table may equal a value obtained by multiplying a least common multiple of maximum numbers of ports of a data node connected to respective switch chip of the multiple switch chips by the number of the multiple switch chips, namely,

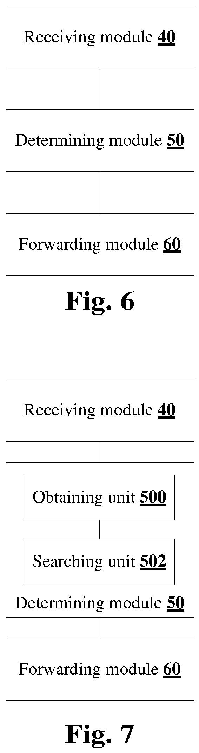

Fig. 6 shows a structural diagram of a device for forwarding a service data flow according to an embodiment of the present disclosure. As shown in Fig. 6, The device for forwarding a service data flow according to embodiments of the present disclosure may include: a receiving module 40, arranged to receive a service data flow from a source data node; a determining module 50, arranged to determine a port for forwarding the service data flow by adopting a calculation method the same as a calculation method adopted by the source data node, where the calculation method adopted by the source data node is determined according to calculation methods pre-set in multiple switch chips and service requirements; and a forwarding module 60, arranged to forward the service data flow to a destination data node via the determined port.

In an exemplary embodiment, the determining module 50 may include: an obtaining unit 500, arranged to obtain a TRUNK table through the calculation method to be used, where a correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that send the service data flow; and a searching unit 502, arranged to search, in the TRUNK table, for the port for forwarding the service data flow.

During the implementation of the exemplary embodiment, the number of members in the TRUNK table may equal a value obtained by multiplying a least common multiple of maximum numbers of ports of a data node connected to respective switch chip of the multiple switch chips by the number of the multiple switch chips.

It can be seen from the above description that the above embodiments realize the following technical effects (it may be appreciated that these effects are effects that certain exemplary embodiments can reach): with the technical solution provided in the embodiments of the present disclosure, physical chips can be either homogenous or heterogeneous. Even though each of the physical chips is from different manufacturers and of different series, the chips can be stacked with each other as long as each of the physical chips can recognize MOD and PORT and is compatible in speed. Besides, the technical solutions provided in the embodiments of the present disclosure can ensure that the TRUNK members of each of the physical chips have the same sorting, and all the ports of the members occupy table entries in the hardware TRUNK table of each of the physical chips. When physical ports of a certain chip exit the TRUNK due to the occurrence of a failure, forwarding can be made to physical ports of other chips through a stacked port to make full use of physical bandwidth of each switch chip. Compared with the related technology, the method provided in the present disclosure does not need Access Control List (ACL) rules, and for chips either in a homogeneous or heterogeneous manner, all the ports of the chips are enabled to join the TRUNK hardware table of each switch chip during construction of the TRUNK group. The usage range of the technical solution provided by the embodiments of the disclosure is wider.

Obviously, those skilled in the art should recognize that each module or each step of the present disclosure mentioned above can be realized by a general computing device. They can be collected on a single computing device or distributed on network constituted by multiple computing devices. Alternatively, they can be realized by executable program codes of the computing device so that they can be stored in the storage medium and executed by the computing device. In addition, under certain situation, they can be realized by executing the shown or described steps in a sequence different from the sequence herein, or by respectively making them into various integrated circuit modules, or by making multiple modules or steps among them into a single integrated circuit module. In this way, the present disclosure is not limited to any specific combination of software and hardware.

The above is just the exemplary embodiments of the present disclosure, and is not intended to limit the present disclosure. To those skilled in the art, the present disclosure can have various modifications and changes. Any alteration, equivalent replacement, improvement and so on made within the principle of the present disclosure should fall within the scope of protection defined by the appended claims of the present disclosure.

### Industrial Applicability

As mentioned above, a method and device for sending or forwarding a service data flow provided in embodiments of the present disclosure have the following advantageous effects. The TRUNK members of each of the physical chips have the same sorting, and all ports of the members occupy table entries in the hardware TRUNK table of each of the physical chips. When physical ports of a certain chip exit the TRUNK due to the occurrence of a failure, forwarding can be made to physical ports of other chips through a stacked port to make full use of physical bandwidth of each switch chip. Compared with the related technology, the method provided in the embodiments of the present disclosure does not need Access Control List (ACL) rules, and for chips either in a homogeneous or heterogeneous manner, all the ports of the chips are enabled to join the TRUNK hardware table of each switch chip during construction of the TRUNK group. The usage range of the technical solution provided by the embodiments of the disclosure is wider.

## Claims

1. A method for sending a service data flow, comprising:
determining, by a source data node according to calculation methods pre-set in multiple switch chips and service requirements, a calculation method to be used, wherein the calculation method is used for selecting a network card needed for sending a service data flow to one switch chip of the multiple switch chips, and at least one port of the source data node is respectively connected to each switch chip of the multiple switch chips; and
selecting, by the source data node, the network card through the calculation method to be used and sending, by the source data node, the service data flow via the network card.

2. The method as claimed in claim 1, wherein selecting, by the source data node, the network card through the calculation method to be used comprises:
obtaining, by the source data node, a TRUNK table through the calculation method to be used, wherein a correspondence between ports of the source data node and network card identifiers of the source data node is respectively stored in each index position in the TRUNK table; and
searching, in the TRUNK table by the source data node, for a network card identifier for sending the service data flow.

3. The method as claimed in claim 2, wherein obtaining, by the source data node, the TRUNK table through the calculation method to be used comprises:
determining, by the source data node, a field involved in calculation through the calculation method to be used;
selecting, by the source data node according to the field involved in the calculation, a field range to be modified; and
obtaining, by the source data node, the TRUNK table by adopting the field range to be modified.

4. The method as claimed in claim 2 or 3, wherein the number of members in the TRUNK table equals a value obtained by multiplying a least common multiple of maximum numbers of ports of a data node connected to respective switch chip of the multiple switch chips by the number of the multiple switch chips.

5. A method for forwarding a service data flow, comprising:
receiving, by a switch chip, a service data flow from a source data node;
determining, by the switch chip, a port for forwarding the service data flow by adopting a calculation method the same as a calculation method adopted by the source data node, wherein the calculation method adopted by the source data node is determined according to calculation methods pre-set in multiple switch chips and service requirements; and
forwarding, by the switch chip, the service data flow to a destination data node via the determined port.

6. The method as claimed in claim 5, wherein determining, by the switch chip, the port for forwarding the service data flow by adopting the calculation method the same as the calculation method adopted by the source data node comprises:
obtaining, by the switch chip, a TRUNK table through the calculation method to be used, wherein a correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that send the service data flow; and
searching, in the TRUNK table by the switch chip, for the port for forwarding the service data flow.

7. The method as claimed in claim 6, wherein the number of members in the TRUNK table equals a value obtained by multiplying a least common multiple of maximum numbers of ports of a data node connected to respective switch chip of the multiple switch chips by the number of the multiple switch chips.

8. A device for sending a service data flow, comprising:
a determining module, arranged to determine, according to calculation methods pre-set in multiple switch chips and service requirements, a calculation method to be used, wherein the calculation method is used for selecting a network card needed for sending a service data flow to one switch chip of the multiple switch chips, and at least one port of the source data node is respectively connected to each switch chip of the multiple switch chips;
a selecting module, arranged to select the network card through the calculation method to be used; and
a sending module, arranged to send the service data flow via the network card.

9. The device as claimed in claim 8, wherein the selecting module comprises:
a calculating unit, arranged to obtain a TRUNK table through the calculation method to be used, wherein a correspondence between ports of the source data node and network card identifiers of the source data node is respectively stored in each index position in the TRUNK table; and
a searching unit, arranged to search, in the TRUNK table, for a network card identifier for sending the service data flow.

10. The device as claimed in claim 9, wherein the calculating unit comprises:
a determining submodule, arranged to determine a field involved in calculation through the calculation method to be used;
a selecting submodule, arranged to select, according to the field involved in the calculation, a field range to be modified; and
an obtaining submodule, arranged to obtain the TRUNK table by adopting the field range to be modified.

11. The device as claimed in claim 9 or 10, wherein the number of members in the TRUNK table equals a value obtained by multiplying a least common multiple of maximum numbers of ports of a data node connected to respective switch chip of the multiple switch chips by the number of the multiple switch chips.

12. A device for forwarding a service data flow, comprising:
a receiving module, arranged to receive a service data flow from a source data node;
a determining module, arranged to determine a port for forwarding the service data flow by adopting a calculation method the same as a calculation method adopted by the source data node, wherein the calculation method adopted by the source data node is determined according to calculation methods pre-set in multiple switch chips and service requirements; and
a forwarding module, arranged to forward the service data flow to a destination data node via the determined port.

13. The device as claimed in claim 12, wherein the determining module comprises:
an obtaining unit, arranged to obtain a TRUNK table through the calculation method to be used, wherein a correspondence between ports of switch chips and identifiers of the switch chips is respectively stored in each index position in the TRUNK table, multiple switch chips connected to the source data node occupy the same number of index positions in the TRUNK table, and the identifiers of the switch chip correspond to network card identifiers of the source data node that send the service data flow; and
a searching unit, arranged to search, in the TRUNK table, for the port for forwarding the service data flow.

14. The device as claimed in claim 13, wherein the number of members in the TRUNK table equals a value obtained by multiplying a least common multiple of maximum numbers of ports of a data node connected to respective switch chip of the multiple switch chips by the number of the multiple switch chips.
